# EUROPEAN PATENT SPECIFICATION

(11) **EP 4 453 052 B1**
(45) Date of publication and mention of the grant of the patent: **31.12.2025**
(21) Application number: 22843309.0
(22) Date of filing: 21.12.2022
(51) Int. Cl.: C08F 265/06, B29C 53/00, B29C 70/06, C08J 5/04

(54) **(METH)ACRYLIC COMPOSITION FOR COMPOSITE, ITS METHOD OF PREPARATION AND USE**
(METH)ACRYLZUSAMMENSETZUNG FÜR VERBUNDSTOFFE, VERFAHREN ZU IHRER HERSTELLUNG UND VERWENDUNG
COMPOSITION (MÉTH)ACRYLIQUE POUR COMPOSITE, SON PROCÉDÉ DE PRÉPARATION ET SON UTILISATION

(30) Priority: 22.12.2021 FR 2114248
(43) Date of publication of application: 30.10.2024
(73) Proprietor: ARKEMA FRANCE, 92800 Puteaux (FR)
(72) Inventor: ZOLLER, Alexander, 64170 LACQ (FR); GERARD, Pierre, 64170 LACQ (FR); LE FICHANT, Audrey, 57501 SAINT AVOLD CEDEX (FR); MOUTH, Estelle, 57501 SAINT AVOLD Cedex (FR)
(74) Representative: Arkema Patent
(86) International application number: PCT/EP2022/087306
(87) International publication number: WO 2023/118344

(56) References cited:
- WO-A1-2020/078991
- WO-A1-2020/079015
- US-A1- 2018 305 551

## Description

### [Field of the invention]

The present invention relates to a (meth)acrylic composition suitable for (meth)acrylic polymeric compositions and (meth)acrylic polymeric composites, its method of preparation, its use and obtained (meth)acrylic polymeric compositions and (meth)acrylic polymeric composites.

In particular the present invention relates to a (meth)acrylic composition that is crosslinked once polymerized and that is suitable for (meth)acrylic composites and more particular for reinforcing elements or fibre reinforced polymer (FRP) rebars.

More particularly the present invention relates to a (meth)acrylic composition suitable for producing reinforcing elements or FRP rebars, preparing such a (meth)acrylic composition, composite reinforcing elements or rebar comprising it after polymerization and method of preparing such a composite reinforcing elements or FRP rebar.

The present invention also relates also to the use of such a (meth)acrylic composition and the use of reinforcing elements or FRP rebars for concrete.

### [Technical problem]

A composite material is a macroscopic combination of two or more non miscible materials. The composite material constitutes at least of a matrix material that forms a continuous phase for the cohesion of the structure and a reinforcing material with various architectures for the mechanical properties.

The aim in using composite materials is to achieve a performance from the composite material that is not available from its separate constituents if used alone.

Consequently composite materials are widely used in several industrial sectors as for example building, automotive, aerospace, transport, leisure, electronics, and sport notably due to their better mechanical performance (higher tensile strength, higher tensile modulus, higher fracture toughness) in comparison with homogenous materials and their low density.

Thermosetting polymers consist of crosslinked three dimensional structures. The crosslinking is obtained by curing reactive groups inside the so called prepolymer. Curing for example can be obtained by heating the polymer chains in order to crosslink and harden the material permanently.

In order to prepare the polymeric composite material the prepolymer is mixed with the other component (for example glass beads for a particulate composite or short fibers for a fibrous composite) or the other component is wetted or impregnated (for example woven nets) and cured afterwards.

A disadvantage of a thermoset polymer matrix is its very high crosslinkage. The matrix cannot be shaped in other forms. Once the polymer has been cured the form is fixed.

Thermoplastic polymers consist of compromise linear or branched polymer chains. The thermoplastic polymers are heated in order to mix the two constituents necessary for producing the composite material and to be cooled for setting. The limit in using thermoplastic polymers for the fabrication of composite materials is their high viscosity in the molten state. The wetting or correct impregnation of the fibers by the thermoplastic polymer can only be achieved, if the thermoplastic resin is sufficiently fluid. In order to have a low viscosity or sufficient fluidity of the thermoplastic polymer the chain length (molecular mass) can be reduced. However a too low molecular weight has a negative impact on the performance of the composite material especially the mechanical properties. On the other hand, the temperature of the thermoplastic polymer could be increased in order to reduce the viscosity in an important way. Consequently, the continuous working temperature is relatively high, above 200°C, influencing directly the economics (costs) of the composite material due to implication of high energy costs. Additionally thermoplastic polymers tend to degrade if the temperature is very high, which is especially true for semicrystalline thermoplastic polymers that have high melting points as for example polyamides (for example PA6.6), polyethersulfon (PES), polyetherimid (PEI), polyetheretherketon (PEEK) or polyphenylene sulfide (PPS). This thermo induced degradation yields to a decreasing molecular weight of the polymer matrix important for the cohesion of the composite material.

Another way for impregnating the fibrous substrate is to dissolve the thermoplastic polymer in an organic solvent. However, this method requires a lot of solvent that has to be evaporated. There are environmental issues in using large quantities of solvent in term of energy and pollution.

In order to prepare a polymeric composite material based on thermoplastic polymer, a thermoplastic polymer resin, commonly known as a "syrup", is used to blend with or impregnate the reinforcing material, for example an filler or a fibrous substrate. Once polymerized, the thermoplastic polymeric syrup constitutes the matrix of the composite material. At the time of impregnation, when preparing polymeric composites, the viscosity of the impregnation syrup must be controlled and adapted so as not to be too fluid or too viscous, so as to impregnate correctly each fibre of the fibrous substrate. When the wetting is partial, depending on whether the syrup is too fluid or too viscous, "naked" zones, i.e. non-impregnated zones, and zones in which drops of polymer form on the fibres, which are the cause of the creation of bubbles, respectively appear. These "naked" zones and these bubbles give rise to the appearance of defects in the final composite material, which are the cause, inter alia, of a loss of mechanical strength of the final composite material. However, the viscosity range useful for the impregnation is low for stocking such material.

In order to allow thermoforming and recycling, it is preferred to use thermoplastic polymers also in composite materials.

However, one disadvantage of thermoplastic composite especially with fibrous reinforcements is the thermal stability. When a thermoplastic composite is thermoformed or exposed longer time at higher temperature some important characteristics change in an unfavorable manner as the decrease of the flexural strength retention and delamination at the polymer at the fibre interface.

Another disadvantage of certain thermoplastic composite is a limited resistance to chemical environment, notably alkaline resistance.

There is a need of a composition for composites that can be thermoformed and provides a high thermal resistance.

There is a need of a composition for composites that possess also sufficient chemical resistance and in particular alkaline resistance.

There is a need of a composition for composites that can be thermoformed and provides a high thermal resistance and alkaline resistance.

The objective of the present invention is to have a composition for preparing a thermoplastic (meth)acrylic composition with a high thermal resistance at increased temperatures and chemical resistance.

The objective of the present invention is also to have a composition for preparing a thermoplastic composite composition that can be thermoformed with a high thermal resistance at increased temperatures and chemical resistance.

Chemical resistance in the present invention signifies especially alkaline resistance. This means at high pH, preferably larger than 10, more preferably larger than 11, even more preferably larger than 12 and advantageously up to 13. This resistance should be achieved at 60°C for 3 months.

The further objective of the present invention is to have a composition for preparing a thermoformable polymeric composites with a high thermal resistance and chemical resistance. High thermal resistance in the present invention signifies also that delamination in the composite is at least strongly reduced.

Another objective of the present invention is to provide a process for preparing a (meth)acrylic composition for (meth)acrylic polymeric compositions or for preparing a (meth)acrylic composite composition with a high thermal resistance and chemical resistance.

Still another objective of the present invention is to have a method for preparing a (meth)acrylic composite composition with a high thermal resistance and chemical resistance.

### [BACKGROUND OF THE INVENTION ]Prior art

The document WO2013/056845 discloses a composite material via in-situ polymerization of thermoplastic (meth)acrylic resins. The polymeric composite material obtained by in-situ polymerization of a thermoplastic (meth)acrylic resin and a fibrous material containing long fibers and its use, a process for making such a composite material and manufactured mechanical or structured part or article comprising this polymeric composite material. The polymerization uses a radical initiator chosen from diacyl peroxides, peroxy esters, dialkyl peroxides, peroxyacetals or azo compounds. The document does not disclose anything about crosslinking after the polymerization of the polymer, obtained polymeric composite composition and its thermal resistance especially at elevated temperatures.

The document WO2014/013028 an impregnation process for a fibrous substrate, a liquid (meth) acrylic syrup for the impregnation process, its method of polymerization and structured article obtained thereof. The liquid (meth) acrylic syrup comprises a (meth)acrylic polymer, a (meth)acrylic monomer and at least one initiator or initiating system for starting the polymerization of the (meth) acrylic monomer. The initiators or initiating systems that are activated by heat. The document does not disclose anything about crosslinking after the polymerization of the polymer, obtained polymeric composite composition and its thermal resistance especially at elevated temperatures.

The document CA 2839915 discloses a bendable FRP rebar which comprises a thermoplastic material. The thermoplastic material can include PE, PS, PMMA, POM, PC, PSLU, PAI, PET, PEEK, PEK, PEI, PES PA6 and PA12. The rebar consist of a flexible polyester.

The document WO2020/079015 discloses (meth)acrylic compositions for composites. Said composition comprises a liquid (meth)acrylic syrup comprising a (meth)acrylic polymer and a (meth)acrylic monomer and a (meth)acrylic comonomer (M2) comprising at least two (meth)acrylic functions. Once polymerized the obtained polymer composition shows better thermal resistance, however no sufficient chemical resistance, especially alkali resistance.

All the prior art documents do not disclose a (meth)acrylic composition suitable for preparation of polymeric composition or composites that have improved thermal resistance and chemical resistance.

### [Brief description of the invention]

Surprisingly it has been found that a (meth)acrylic composition MC1 comprising:
a) 100 parts of a liquid (meth)acrylic syrup comprising a1) between 10wt% and 50wt% of a (meth)acrylic polymer (P1), a2) between 50wt% and 90wt% of a (meth)acrylic monomer (M1) comprising only one (meth)acrylic function, and
b) between 0.01 and 30phr by weight of a component (LC1) comprising a compound (C1) with at least two polymerizable groups (PG1) and (PG2) and at least two hydroxyl groups;
c) optionally between 0.1phr and 5phr of an initiator (INI) to start the polymerization of the (meth)acrylic monomer (M1) and polymerizable groups (PG1) and (PG2);
allows to provide a composition for the preparation of (meth)acrylic polymers or composites that possesses an improved thermal resistance and chemical resistance as compared to a composition not comprising the component b).

Surprisingly it has also been discovered that a (meth)acrylic composition MC1 comprising:
a) 100 parts of a liquid (meth)acrylic syrup comprising a1) between 10wt% and 50wt% of a (meth)acrylic polymer (P1), a2) between 50wt% and 90wt% of a (meth)acrylic monomer (M1) comprising only one (meth)acrylic function, and
b) between 0.01 and 30phr by weight of a component (LC1) comprising a compound (C1) with at least two polymerizable groups (PG1) and (PG2) and at least two hydroxyl groups;
c) optionally between 0.1phr and 5phr of an initiator (INI) to start the polymerization of the (meth)acrylic monomer (M1) and polymerizable groups (PG1) and (PG2);
can be used to increase the thermal resistance and chemical resistance of a polymer or polymeric composite made from that composition MC1 as compared to a composition not comprising the component b).

Surprisingly it has also been discovered that a process for preparing a (meth)acrylic polymeric composition MCP1 or for preparing a (meth)acrylic polymeric composite composition PC1, said method comprises the steps of:
i) providing a (meth)acrylic composition MC1 comprising:
   a) 100 parts of a liquid (meth)acrylic syrup comprising
      a1) between 10wt% and 50wt% of a (meth)acrylic polymer (P1),
      a2) between 50wt% and 90wt% of a (meth)acrylic monomer (M1) comprising only one (meth)acrylic function, and
   b) between 0.01 and 30phr by weight of a component (LC1) comprising a compound (C1) with at least two polymerizable groups (PG1) and (PG2) and at least two hydroxyl groups;
   c) optionally between 0.1phr and 5phr of an initiator (INI) to start the polymerization of the (meth)acrylic monomer (M1) and polymerizable groups (PG1) and (PG2);
ii) polymerizing said (meth)acrylic composition MC1 yields to a composition of (meth)acrylic polymers or composites that possess a better thermal resistance and chemical resistance as compared to a composition not comprising the component b).

Surprisingly it has also been discovered that a process comprising the steps of:
i) providing a polymeric composite PC1 or part made of polymerized (meth)acrylic composition MC1,
ii) heating the polymeric composite PC1 or part
iii) transforming the polymeric composite PC1 or part yields to a process for transforming a polymeric composite PC1 or a polymeric composite part, but also mechanical or structured parts or products, said process does not change its mechanical properties in an important manner once bended.

Surprisingly it has also been discovered that a method for preparing a polymeric composite PC1 from a (meth)acrylic composition MC1, said method comprises the following steps:
i) impregnating fibres or a fibrous substrate with the (meth)acrylic composition MC1 comprising:
   a) 100 parts of a liquid (meth)acrylic syrup comprising
      a1) between 10wt% and 50wt% of a (meth)acrylic polymer (P1),
      a2) between 50wt% and 90wt% of a (meth)acrylic monomer (M1) comprising only one (meth)acrylic function, and
   b) between 0.01 and 30phr by weight of a component (LC1) comprising a compound (C1) with at least two polymerizable groups (PG1) and (PG2) and at least two hydroxyl groups;
   c) optionally between 0.1phr and 5phr of an initiator (INI) to start the polymerization of the (meth)acrylic monomer (M1) and polymerizable groups (PG1) and (PG2);
ii) polymerizing the (meth)acrylic composition MC1; yields to a polymeric composite PC1 that possess a better thermal resistance and chemical resistance as compared to polymeric composite made from a composition not comprising the component b).

### [Detailed description of the invention]

According to a first aspect, the present invention relates to a (meth)acrylic composition MC1, said composition is comprising:
a) 100 parts of a liquid (meth)acrylic syrup comprising a1) between 10wt% and 50wt% of a (meth)acrylic polymer (P1), a2) between 50wt% and 90wt% of a (meth)acrylic monomer (M1) comprising only one (meth)acrylic function, and
b) between 0.01 and 30phr by weight of a component (LC1) comprising a compound (C1) with at least two polymerizable groups (PG1) and (PG2) and at least two hydroxyl groups;
c) optionally between 0.1phr and 5phr of an initiator (INI) to start the polymerization of the (meth)acrylic monomer (M1) and polymerizable groups (PG1) and (PG2).

According to a second aspect, the present invention relates to a (meth)acrylic composition (MC1) comprising:
a) 100 parts of a liquid (meth)acrylic syrup comprising a1) between 10wt% and 50wt% of a (meth)acrylic polymer (P1), a2) between 50wt% and 90wt% of a (meth)acrylic monomer (M1) comprising only one (meth)acrylic function, and
b) between 0.01 and 30phr by weight of a component (LC1) comprising a compound (C1) with at least two polymerizable groups (PG1) and (PG2) and at least two hydroxyl groups;
c) optionally between 0.1phr and 5phr of an initiator (INI) to start the polymerization of the (meth)acrylic monomer (M1) and polymerizable groups (PG1) and (PG2).

According to a third aspect the present invention relates to a method for preparing a (meth)acrylic composition MC1 comprising following steps:
i) providing the following components:
   a) 100 parts of a liquid (meth)acrylic syrup comprising a1) between 10wt% and 50wt% of a (meth)acrylic polymer (P1) and a2) between 50wt% and 90wt% of a (meth)acrylic monomer (M1) comprising only one (meth)acrylic function;
   b) between 0.01 and 30phr by weight of a component (LC1) comprising a compound (C1) with at least two polymerizable groups (PG1) and (PG2) and at least two hydroxyl groups;
   c) optionally between 0.1phr and 5phr of an initiator (INI) to start the polymerization of the (meth)acrylic monomer (M1) and polymerizable groups (PG1) and (PG2); and
ii) mixing the components a) to b or a) to c).

According to a fourth aspect the present invention relates to use of a (meth)acrylic composition MC1 to impregnate fibres or a fibrous substrate, said (meth)acrylic composition MC1 comprises:
a) 100 parts of a liquid (meth)acrylic syrup comprising a1) between 10wt% and 50wt% of a (meth)acrylic polymer (P1), a2) between 50wt% and 90wt% of a (meth)acrylic monomer (M1) comprising only one (meth)acrylic function, and
b) between 0.01 and 30phr by weight of a component (LC1) comprising a compound (C1) with at least two polymerizable groups (PG1) and (PG2) and at least two hydroxyl groups;
c) between 0.1phr and 5phr of an initiator (INI) to start the polymerization of the (meth)acrylic monomer (M1) and polymerizable groups (PG1) and (PG2).

According to a fifth aspect the present invention relates to a process for preparing a polymeric composite PC1 from a (meth)acrylic composition MC1, said method comprises the following steps:
i) providing a (meth)acrylic composition MC1 comprising
   a) 100 parts of a liquid (meth)acrylic syrup comprising
      a1) between 10wt% and 50wt% of a (meth)acrylic polymer (P1),
      a2) between 50wt% and 90wt% of a (meth)acrylic monomer (M1) comprising only one (meth)acrylic function, and
   b) between 0.01 and 30phr by weight of a component (LC1) comprising a compound (C1) with at least two polymerizable groups (PG1) and (PG2) and at least two hydroxyl groups,
   c) between 0.1phr and 5phr of an initiator (INI) to start the polymerization of the (meth)acrylic monomer (M1) and polymerizable groups (PG1) and (PG2);
ii)polymerizing the (meth)acrylic composition MC1 that has optionally impregnated fibres or fibrous substrate.

According to a sixth aspect the present the present invention relates to a method for preparing a (meth)acrylic polymeric composite composition PC1 from a (meth)acrylic composition MC1, said method comprises the following steps:
i) impregnating fibres or a fibrous substrate with a (meth)acrylic composition MC1 comprising:
   a) 100 parts of a liquid (meth)acrylic syrup comprising
      a1) between 10wt% and 50wt% of a (meth)acrylic polymer (P1),
      a2) between 50wt% and 90wt% of a (meth)acrylic monomer (M1) comprising only one (meth)acrylic function, and
   b) between 0.01 and 30phr by weight of a component (LC1) comprising a compound (C1) with at least two polymerizable groups (PG1) and (PG2) and at least two hydroxyl groups;
   c) between 0.1phr and 5phr of an initiator (Ini) to start the polymerization of the (meth)acrylic monomer (M1) and (and polymerizable groups (PG1) and (PG2); and
ii) polymerizing the (meth)acrylic composition MC1 that has impregnated the fibres or fibrous substrate.

According to a seventh aspect the present the present invention relates to a process for transforming a (meth)acrylic polymeric composite composition PC1 or polymeric composite parts, but also mechanical or structured parts or products, said process comprises the steps of:
i) providing a (meth)acrylic polymeric composite composition PC1 or a part made from polymerizing a (meth)acrylic composition MC1 that has before impregnated fibres or a fibrous substrate, said composition MC1 is comprising:
   a) 100 parts of a liquid (meth)acrylic syrup comprising
      a1) between 10wt% and 50wt% of a (meth)acrylic polymer (P1),
      a2) between 50wt% and 90wt% of a (meth)acrylic monomer (M1) comprising only one (meth)acrylic function, and
   b) between 0.01 and 30phr by weight of a component (LC1) comprising a compound (C1) with at least two polymerizable groups (PG1) and (PG2) and at least two hydroxyl groups;
   c) between 0.1phr and 5phr of an initiator (INI) to start the polymerization of the (meth)acrylic monomer (M1) and polymerizable groups (PG1) and (PG2),
ii) heating the (meth)acrylic polymeric composite composition PC1 or part
iii) transforming the (meth)acrylic polymeric composite composition PC1 or part.

By the term "(meth)acrylic" as used is denoted any kind of acrylic and methacrylic monomers or polymers.

By the term "PMMA" as used are denoted homo- and copolymers of methylmethacrylate (MMA), for the copolymer of MMA the weight ratio of MMA inside the PMMA is at least 70 wt%.

By the term "monomer" as used is denoted is a molecule which can undergo polymerization.

By the term "polymerization" as used is denoted the process of converting a monomer or a mixture of monomers into a polymer.

By the term "thermoplastic polymer" as used is denoted a polymer that turns to a liquid or becomes more liquid or less viscous when heated and that can take on new shapes by the application of heat and pressure. This applies also for crosslinked thermoplastic polymers that can be thermoformed when heated above the softening temperature.

By the term "thermosetting polymer" as used is denoted a prepolymer in a soft, solid or viscous state that changes irreversibly into an infusible, insoluble polymer network by curing.

By the term "polymer composite" as used is denoted a multicomponent material comprising multiple different phase domains in which at least one type of phase domain is a continuous phase and in which at least one component is a polymer.

By the term "rebar" as used is denoted a reinforcing bar that is used as a tension device in reinforced concrete and reinforced masonry structures to strengthen and aid the concrete under tension. Rebar significantly increases the tensile strength of concrete or the structure.

By the term "initiator" as used is denoted a chemical species that forms compound or an intermediate compound that starts the polymerization of a monomer, that to capable of linking successively with a large number of other monomers into a polymeric compound.

By the abbreviation "phr" is meant weight parts per hundred parts of composition. For example 1phr of initiator in the composition means that 1kg of initiator is added to 100kg of composition.

By the abbreviation "ppm" is meant weight parts per million parts of composition. For example 1000ppm of a compound in the composition means that 0.1kg of compound is present in 100kg of composition.

By saying that a range from x to y in the present invention, it is meant that the upper and lower limit of this range are included, equivalent to at least x and up to y.

By saying that a range is between x and y in the present invention, it is mean t that the upper and lower limit of this range are excluded, equivalent to more than x and less than y.

The (meth)acrylic syrup a) of the (meth)acrylic composition MC1 according to the invention, comprises a (meth)acrylic polymer (P1) and a (meth)acrylic monomer (M1).

The liquid (meth)acrylic syrup a) of the (meth)acrylic composition MC1 according to the invention comprises between 10wt% and 50wt% of a (meth)acrylic polymer (P1) and between 50wt% and 90wt% of a (meth)acrylic monomer (M1). Preferably the liquid (meth)acrylic syrup a) comprises between 10wt% and 40wt% of a (meth)acrylic polymer (P1) and between 60wt% and 90wt% of a (meth)acrylic monomer (M1); and more preferably between 10wt% and 30wt% of a (meth)acrylic polymer (P1) and between 70wt% and 90wt% of a (meth)acrylic monomer (M1).

The dynamic viscosity of the liquid (meth) acrylic syrup a) is in a range from 10 mPa*s to 10000 mPa*s, preferably from 20 mPa*s to 7000 mPa*s and advantageously from 20 mPa*s to 5000 mPa*s and more advantageously from 20 mPa*s to 2000 mPa*s and even more advantageously between 20mPa*s and 1000 mPa*s. The viscosity of the syrup can be easily measured with a Rheometer or viscosimeter. The dynamic viscosity is measured at 25°C. If the liquid (meth) acrylic syrup has a Newtonian behaviour, meaning no shear thinning, the dynamic viscosity is independent of the shearing in a rheometer or the speed of the mobile in a viscometer. If the liquid composition LC1 has a non-Newtonian behaviour, meaning shear thinning, the dynamic viscosity is measured at a shear rate of 1s⁻¹ at 25°C.

**As regards the** (meth)acrylic composition MC1 **of the invention** it comprises a (meth)acrylic monomer (M1) and a (meth)acrylic polymer (P1). Once polymerized the (meth)acrylic monomer (M1) is transformed to a (meth)acrylic polymer (P2) comprising the monomeric units of (meth)acrylic monomer (M1) and other possible monomers.

Preferably dynamic viscosity of the (meth)acrylic composition MC1 is also in a range from 10 mPa*s to 20000 mPa*s, preferably from 20 mPa*s to 15000 mPa*s and advantageously from 20 mPa*s to 10000 mPa*s and more advantageously from 20 mPa*s to 5000 mPa*s and even more advantageously between 20mPa*s and 2000 mPa*s. The dynamic viscosity is measured in the same way.

**As regards the (meth)acrylic polymer (P1),** mention may be made of polyalkyl methacrylates or polyalkyl acrylates. By polyalkyl methacrylates or polyalkyl acrylates are meant polymers that comprise at least 50wt% of monomers chosen of alkyl esters of acrylic acid or alkyl esters of methacrylic acid. According to a preferred embodiment, the (meth)acrylic polymer (P1) is polymethyl methacrylate (PMMA).

The term "PMMA" denotes a methyl methacrylate (MMA) homopolymer or copolymer or mixtures thereof.

According to one embodiment, the methyl methacrylate (MMA) homo- or copolymer comprises at least 70%, preferably at least 80%, advantageously at least 90% and more advantageously at least 95% by weight of methyl methacrylate.

According to another embodiment, the (meth)acrylic polymer (P1) is a mixture of at least one homopolymer and at least one copolymer of MMA, or a mixture of at least two homopolymers or two copolymers of MMA with a different average molecular weight, or a mixture of at least two copolymers of MMA with a different monomer composition.

The copolymer of methyl methacrylate (MMA) comprises from 70% to 99.9% by weight of methyl methacrylate and from 0.1% to 30% by weight of at least one monomer containing at least one ethylenic unsaturation that can copolymerize with methyl methacrylate.

These monomers are well known and mention may be made especially of acrylic and methacrylic acids and alkyl(meth)acrylates in which the alkyl group contains from 1 to 12 carbon atoms. As examples, mention may be made of methyl acrylate and ethyl, butyl or 2-ethylhexyl (meth)acrylate. Preferably, the comonomer is an alkyl acrylate in which the alkyl group contains from 1 to 4 carbon atoms.

According to a first preferred embodiment, the copolymer of methyl methacrylate (MMA) comprises from 80% to 99.9%, advantageously from 85% to 99.9% and more advantageously from 90% to 99.9% by weight of methyl methacrylate and from 0.1% to 20%, advantageously from 0.1% to 15% and more advantageously from 0.1% to 10% by weight of at least one monomer containing at least one ethylenic unsaturation that can copolymerize with methyl methacrylate. Preferably, the comonomer is chosen from methyl acrylate and ethyl acrylate, and mixtures thereof.

The weight-average molecular mass of the (meth)acrylic polymer (P1) should be high, which means greater than 50 000 g/mol, preferably greater than 70 000 g/mol, more preferably greater than 90 000 g/mol and most preferably greater than 100 000 g/mol.

The weight-average molecular mass can be measured by size exclusion chromatography (SEC).

The (meth)acrylic polymer (P1) is fully soluble in the (meth)acrylic monomer (M1) or in the mixture of (meth)acrylic monomers. It enables the viscosity of the (meth)acrylic monomer (M1) or the mixture of (meth)acrylic monomers to be increased. The solution obtained is a liquid composition generally called a "syrup" or "prepolymer". As said before, the dynamic viscosity value of the liquid (meth)acrylic syrup a) is between 10 mPa.s and 10 000 mPa.s. The viscosity of the syrup can be readily measured with a rheometer or a viscometer. The dynamic viscosity is measured at 25°C.

Advantageously, the liquid (meth)acrylic composition or syrup contains no additional voluntarily added solvent.

**As regards the (meth)acrylic monomer (M1),** the monomer is chosen from alkyl acrylic monomers, alkyl methacrylic monomers, hydroxyalkyl acrylic monomers and hydroxyalkyl methacrylic monomers, and mixtures thereof. By alkyl acrylic monomers, alkyl methacrylic monomers are meant alkyl esters of acrylic acid or methacrylic acid.

Preferably, the (meth)acrylic monomer (M1) is chosen from hydroxyalkyl acrylic monomers, hydroxyalkyl methacrylic monomers, alkyl acrylic monomers, alkyl methacrylic monomers and mixtures thereof, the alkyl group containing from 1 to 22 linear, branched or cyclic carbons; the alkyl group preferably containing from 1 to 12 linear, branched or cyclic carbons.

More preferably, the (meth)acrylic monomer (M1) is chosen from alkyl acrylic monomers or alkyl methacrylic monomers and mixtures thereof, the alkyl group containing from 1 to 22 linear, branched or cyclic carbons; the alkyl group preferably containing from 1 to 12 linear, branched or cyclic carbons.

Advantageously, the (meth)acrylic monomer (M1) is chosen from methyl methacrylate, ethyl methacrylate, methyl acrylate, ethyl acrylate, n-butyl acrylate, isobutyl acrylate, n-butyl methacrylate, isobutyl methacrylate, cyclohexyl acrylate, cyclohexyl methacrylate, isobornyl acrylate, isobornyl methacrylate, hydroxyethyl acrylate and hydroxyethyl methacrylate, and mixtures thereof.

More advantageously, the (meth)acrylic monomer (M1) is chosen from methyl methacrylate, ethyl methacrylate, methyl acrylate, ethyl acrylate, n-butyl acrylate, isobutyl acrylate, n-butyl methacrylate, isobutyl methacrylate, cyclohexyl acrylate, cyclohexyl methacrylate, isobornyl acrylate, isobornyl methacrylate, and mixtures thereof.

According to a preferred embodiment, at least 50% by weight and preferably at least 60% by weight of the (meth)acrylic monomer (M1) is methyl methacrylate.

According to a first more preferred embodiment, at least 50% by weight, preferably at least 60% by weight, more preferably at least 70% by weight, advantageously at least 80% by weight and even more advantageously 90% by weight of the monomer (M1) is a mixture of methyl methacrylate with optionally at least one other monomer.

According to a second more preferred embodiment, at least 95% by weight and more preferably at least 98% by weight of the monomer (M1) is methyl methacrylate.

According to a third more preferred embodiment, at 100% by weight of the monomer (M1) is methyl methacrylate.

**With regard to the component (LC1) of the composition (PC1),** it is preferably a liquid. By liquid is meant that the component (LC1) is liquid in a temperature interval between -20° to 40°C, preferably between 0° to 40°C and more preferably between 10°C and 40°C. It could be still liquid outside these limits, but is liquid at least between these limits.

The viscosity of the component (LC1) is between 0.5mPa*s and 30Pa*s at 25°C. Preferably the viscosity is between 1mPa*s and 25Pa*s, more preferably between 10mPa*s and 20Pa*s, even more preferably between 50mPa*s and 18Pa*s and advantageously between 100mPa*s and 18Pa*s. The viscosity of component (LC1) is the dynamic viscosity. If there should be shear thinning the value of the dynamic viscosity is taken at a shear rate of 1 1/s. The viscosity is measured with a rheometer.

The component (LC1) is present in (meth)acrylic composition MC1 between 0.01 and 30phr by weight, preferably is present between 0.1 and 25phr for 100 parts of a liquid (meth)acrylic syrup, more preferably between 0.5 and 20phr, even more preferably between 1 and 20phr and advantageously between 1 and 18phr.

In a first more advantageously embodiment the compound (C1) is present in (meth)acrylic composition MC1 between 1phr and 20phr by weight and more advantageously between 2phr and 20phr by weight.

In a second more advantageously embodiment the compound (C1) is present in (meth)acrylic composition MC1 between 1 and 15phr by weight and more advantageously between 2phr and 15phr by weight.

In a third more advantageously embodiment the compound (C1) is present in (meth)acrylic composition MC1 between 1phr and 11phr by weight and more advantageously between 2phr and 11phr by weight.

The compound (C1) with at least two polymerizable groups (PG1) and (PG2) and at least two hydroxyl groups presents at least 30wt% of component (LC1), more preferably at least 40wt% of the component (LC1).

In one embodiment compound (C1) with at least two polymerizable groups (PG1) and (PG2) and at least two hydroxyl groups presents 100wt% of component (LC1)

In another embodiment, the component (LC1) can also be a mixture of several compounds, one of them being the compound (C1) with at least two polymerizable groups (PG1) and (PG2) and at least two hydroxyl groups.

The component (LC1) or liquid component (LC1) can additionally comprise a monomer (M2) or a mixture of monomers (M2x). The monomer (M2) or each respective monomer of the mixture of monomers (M2x) comprise at least one carbon double bond. The monomer (M2) or a mixture of monomers (M2x) is different from monomer (M1).

The monomer (M2) can be chosen from (meth)acrylic monomers, allyl monomers or styrenic monomers or mixtures thereof for (Mx).

In a variation monomer (M2) can be chosen from (meth)acrylic monomers, allyl monomers or mixtures thereof for (Mx).

Preferably the monomer (M2) is chosen from styrene, α-methylstyrene, vinyltoluene, divinylbenzene, alkyl (meth)acrylates that have an alkyl group containing 1 to 10 carbon atoms, and hydroxyethyl (meth)acrylate, as well as bifunctional (meth) acrylates such as butanediol di (meth) acrylate, 1,6-hexanediol di(meth)acrylate and di (meth) acrylates having a glycol structure, and polyfunctional (meth)acrylates such as trimethylolpropane tri (meth) acrylate.

In a first more preferred embodiment, the monomer (M2) is chosen from alkyl (meth)acrylates that have an alkyl group containing 1 to 10 carbon atoms, and hydroxyethyl (meth)acrylate, as well as bifunctional (meth) acrylates such as butanediol di (meth) acrylate, 1,6-hexanediol di(meth)acrylate and di (meth) acrylates having a glycol structure, and polyfunctional (meth)acrylates such as trimethylolpropane tri (meth) acrylate.

In a second more preferred embodiment the monomer (M2) or mixtures thereof for (Mx) comprises no styrene.

In a third more preferred embodiment the monomer (M2) or mixtures thereof for (Mx) comprises no styrene based monomers.

In a fifth more preferred embodiment the monomer (M2) or mixtures thereof for (Mx) comprises styrene based monomers.

In a fifth more preferred embodiment the monomer (M2) is chosen from a compound comprising at least two (meth)acrylic functions. The (meth)acrylic monomer (M2) can also be chosen from a mixture of at least two compounds (M2a) and (M2b) each respectively comprising at least two (meth)acrylic functions.

The (meth)acrylic monomer (M2) which is chosen from a compound comprising at least two (meth)acrylic functions can be chosen from 1,3-butylene glycol dimethacrylate; 1,4-butanediol dimethacrylate; 1,6 hexanediol diacrylate; 1,6 hexanediol dimethacrylate; diethylene glycol dimethacrylate; dipropylene glycol diacrylate; ethoxylated (10) bisphenol a diacrylate; ethoxylated (2) bisphenol a dimethacrylate; ethoxylated (3) bisphenol a diacrylate; ethoxylated (3) bisphenol a dimethacrylate; ethoxylated (4) bisphenol a diacrylate; ethoxylated (4) bisphenol a dimethacrylate; ethoxylated bisphenol a dimethacrylate; ethoxylated (10) bisphenol dimethacrylate; ethylene glycol dimethacrylate; polyethylene glycol (200) diacrylate; polyethylene glycol (400) diacrylate; polyethylene glycol (400) dimethacrylate; polyethylene glycol (400) dimethacrylate; polyethylene glycol (600) diacrylate; polyethylene glycol (600) dimethacrylate; polyethylene glycol 400 diacrylate; propoxylated (2) neopentyl glycol diacrylate; tetraethylene glycol diacrylate; tetraethylene glycol dimethacrylate; tricyclodecane dimethanol diacrylate; tricyclodecanedimethanol dimethacrylate; triethylene glycol diacrylate; triethylene glycol dimethacrylate; tripropylene glycol diacrylate; ethoxylated (15) trimethylolpropane triacrylate; ethoxylated (3) trimethylolpropane triacrylate; ethoxylated (6) trimethylolpropane triacrylate; ethoxylated (9) trimethylolpropane triacrylate; ethoxylated 5 pentaerythritol triacrylate; ethoxylated (20) trimethylolpropane triacrylate; propoxylated (3) glyceryl triacrylate; trimethylolpropane triacrylate; propoxylated (5.5) glyceryl triacrylate; pentaerythritol triacrylate; propoxylated (3) glyceryl triacrylate; propoxylated (3) trimethylolpropane triacrylate; trimethylolpropane triacrylate; trimethylolpropane trimethacrylate; tris(2-hydroxy ethyl) isocyanurate triacrylate; di-trimethylolpropane tetraacrylate; dipentaerythritol pentaacrylate; ethoxylated (4) pentaerythritol tetraacrylate; pentaerythritol tetraacrylate; dipentaerythritol hexaacrylate; 1,10 decanediol diacrylate; 1,3-butylene glycol diacrylate; 1,4-butanediol diacrylate; 1,9-nonanediol diacrylate; 2-(2-Vinyloxyethoxy)ethyl acrylate; 2-butyl-2-ethyl-1,3-propanediol diacrylate; 2-methyl-1,3-propanediol diacrylate; 2-methyl-1,3-propanediyl ethoxy acrylate; 3 methyl 1,5-pentanediol diacrylate; alkoxylated cyclohexane dimethanol diacrylate; alkoxylated hexanediol diacrylate; cyclohexane dimethanol diacrylate; ethoxylated cyclohexane dimethanol diacrylate; diethyleneglycol diacrylate; dioxane glycol diacrylate; ethoxylated dipentaerythritol hexaacrylate; ethoxylated glycerol triacrylate; ethoxylated neopentyl glycol diacrylate; hydroxypivalyl hydroxypivalate diacrylate; neopentyl glycol diacrylate; poly (tetramethylene glycol) diacrylate; polypropylene glycol 400 diacrylate; polypropylene glycol 700 diacrylate; propoxylated (6) ethoxylated bisphenol A diacrylate; propoxylated ethylene glycol diacrylate; propoxylated (5) pentaerythritol tetraacrylate; and propoxylated trimethylol propane triacrylate

Preferably the (meth)acrylic monomer (M2) is chosen from ethylene glycol dimethacrylate, neopentyl glycol diacrylate, neopentyl glycol dimethacrylate, 1,4-butanediol dimethacrylate, 1,4-butanediol diacrylate, 1,3-butylene glucol diacrylate, 1,3-butylene glycol dimethacrylate, triethylene glycol dimethacrylate and triethylene glycol diacrylate or mixtures thereof.

The monomer (M2) can be present in (meth)acrylic composition MC1 between 0.01 and 15phr by weight, preferably is present between 0.1 and 10phr for 100 parts of a liquid (meth)acrylic syrup, more preferably between 0.1 and 9phr, even more preferably between 0.1 and 8.5phr and advantageously between 0.1 and 8phr.

The at least two polymerizable groups (PG1) and (PG2) of compound (C1) are preferably carbon double bonds.

The at least two polymerizable groups (PG1) and (PG2) of compound (C1) are more preferably α,β-unsaturated carbonyl groups.

The at least two polymerizable groups (PG1) and (PG2) of compound (C1) can be chosen from an acrylate group, a methacylate group or a condensation product comprising maleic acid or itaconic acid or fumaric acid.

Preferably the compound (C1) is a vinyl ester or an unsaturated polyester.

In a first more preferred embodiment the compound (C1) is a vinyl ester. The vinyl ester is typically a reaction product obtainable by reacting a polyepoxide (such as an epoxy resin) with an ethylenically unsaturated double bond-containing monocarboxylic acid as (meth) acrylic acid for example, it has the same backbone as the polyepoxide in a main chain thereof, and is curable due to the presence of unsaturated double bonds in a molecule thereof. The backbone can be one or more types of backbones selected from the group consisting of backbones of bisphenol A, bisphenol F, phenol novolak, cresol novolak, hydrogenated bisphenol A, hydrogenated bisphenol F, aliphatic ester, aliphatic ether, and aromatic ester types.

In a second more preferred embodiment the compound (C1) is an unsaturated polyester. The unsaturated polyester is a reaction product of at least one dibasic organic acid or its anhydride and at least one polyhydric alcohol.

In one embodiment of first more preferred embodiment the compound (C1) comprises following structure (1):

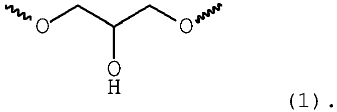

In another embodiment of first more preferred embodiment the compound (C1) comprises following structure (2):

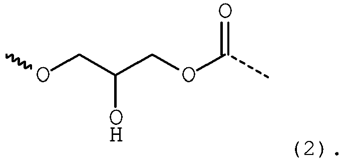

In still another embodiment of first more preferred embodiment the compound (C1) comprises following structure (3): 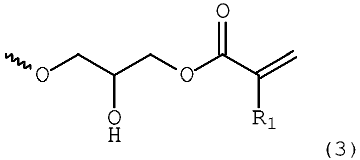 with R₁ being H or CH₃.

In a still another embodiment of first more preferred embodiment the compound (C1) comprises following structure (4): 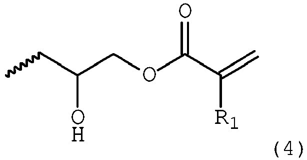 with R₁ being H or CH₃.

The structures (1) to (4) can be present in compound (C1) also two or more times.

More preferably, the compound (C1) comprises at least two times any of the structures (1) to (4).

**As regards the initiator (INI)** to start the polymerization of the (meth)acrylic monomers (M1) and optionally (M2), it is chosen from a radical initiator.

Preferably the initiator (INI) is activated by heat.

The radical initiators (INI) can be chosen from a peroxy group comprising compound or an azo group comprising compounds and preferably from a peroxy group comprising compound.

Preferably the peroxy group comprising compound comprises from 2 to 30 carbon atoms.

Preferably the peroxy group comprising compound is chosen from diacyl peroxides, peroxy esters, peroxydicarbonates, dialkyl peroxides, peroxyacetals, hydroperoxide or peroxyketale.

The initiator (INI) is chosen from diisobutyryl peroxide, cumyl peroxyneodecanoate, di(3-methoxybutyl) peroxydicarbonate ,1,1,3,3-Tetramethylbutyl peroxyneodecanoate, cumyl peroxyneoheptanoate, di-n-propyl peroxydicarbonate, tert-amyl peroxyneodecanoate, , di-sec-butyl peroxydicarbonate, diisopropyl peroxydicarbonate, di(4-tert-butylcyclohexyl) peroxydicarbonate, di-(2-ethylhexyl)-peroxydicarbonate, tert-amyl peroxyneodecanoate, tert-butyl peroxyneodecanoate, di-n-butyl peroxydicarbonate, dicetyl peroxydicarbonate, dimyristyl peroxydicarbonate, 1,1,3,3-tetramethylbutylperoxypivalate, tert-butyl peroxyneoheptanoate, tert-amyl peroxypivalate, tert-butyl peroxypivalate, di-(3,5,5-trimethylhexanoyl)-peroxide, dilauroyl peroxide, didecanoyl peroxide, 2,5-dimethyl-2,5-di(2-ethylhexanoylperoxy)-hexane, 1,1,3,3-tetramethylbutyl peroxy-2-ethylhexanoate, tert-amyl peroxy-2-ethylhexanoate, dibenzoyl peroxide, tert-butyl peroxy-2-ethylhexanoate, tert-butyl peroxydiethylacetate, tert-butyl peroxyisobutyrate, 1,1-di-(tert-butylperoxy)-3,3,5-trimethylcyclohexane, 1,1-di(tert-amylperoxy)cyclohexane, 1,1-di-(tert-butylperoxy)-cyclohexane, tert-amyl peroxy-2-ethylhexylcarbonate, , tert-amyl peroxyacetate, tert-butyl peroxy-3,5,5-trimethylhexanoate, 2,2-di-(tert-butylperoxy)-butane, tert-butyl peroxyisopropylcarbonate, tert-butyl peroxy-2-ethylhexylcarbonate, tert-amyl peroxybenzoate, tert-butyl peroxyacetate, butyl 4,4-di(tert-butylperoxy)valerate, tert-butyl peroxybenzoate, di-tert-amylperoxide, dicumyl peroxide, di-(2-tert-butyl-peroxyisopropyl)-benzene, 2,5-dimethyl-2,5-di-(tert-butylperoxy)-hexane, tert-butylcumyl peroxide, 2,5-dimethyl-2,5-di(tert-butylperoxy)hexyne-3, di-tert-butyl peroxide, 3,6,9-triethyl-3,6,9-trimethyl-1,4,7-triperoxonane, 2,2'-azobisisobutyronitrile (AIBN), 2,2'-azodi-(2-methylbutyronitrile), azobisisobutyramide, 2,2'-azobis(2,4-dimethylvaleronitrile), 1,1'-Azodi(hexahydrobenzonitrile), or 4,4'-azobis(4-cyanopentanoic).

Preferably the initiator (Ini) is chosen from diisobutyryl peroxide, cumyl peroxyneodecanoate, di(3-methoxybutyl) peroxydicarbonate ,1,1,3,3-Tetramethylbutyl peroxyneodecanoate, cumyl peroxyneoheptanoate, di-n-propyl peroxydicarbonate, tert-amyl peroxyneodecanoate, , di-sec-butyl peroxydicarbonate, diisopropyl peroxydicarbonate, di(4-tert-butylcyclohexyl) peroxydicarbonate, di-(2-ethylhexyl)-peroxydicarbonate, tert-amyl peroxyneodecanoate, tert-butyl peroxyneodecanoate, di-n-butyl peroxydicarbonate, dicetyl peroxydicarbonate, dimyristyl peroxydicarbonate, 1,1,3,3-tetramethylbutylperoxypivalate, tert-butyl peroxyneoheptanoate, tert-amyl peroxypivalate, tert-butyl peroxypivalate, di-(3,5,5-trimethylhexanoyl)-peroxide, dilauroyl peroxide, didecanoyl peroxide, 2,5-dimethyl-2,5-di(2-ethylhexanoylperoxy)-hexane, 1,1,3,3-tetramethylbutyl peroxy-2-ethylhexanoate, tert-amyl peroxy-2-ethylhexanoate, dibenzoyl peroxide, tert-butyl peroxy-2-ethylhexanoate, tert-butyl peroxydiethylacetate, tert-butyl peroxyisobutyrate, 1,1-di-(tert-butylperoxy)-3,3,5-trimethylcyclohexane, 1,1-di(tert-amylperoxy)cyclohexane, 1,1-di-(tert-butylperoxy)-cyclohexane, tert-amyl peroxy-2-ethylhexylcarbonate, , tert-amyl peroxyacetate, tert-butyl peroxy-3,5,5-trimethylhexanoate, 2,2-di-(tert-butylperoxy)-butane, tert-butyl peroxyisopropylcarbonate, tert-butyl peroxy-2-ethylhexylcarbonate, tert-amyl peroxybenzoate, tert-butyl peroxyacetate, butyl 4,4-di(tert-butylperoxy)valerate, tert-butyl peroxybenzoate, di-tert-amylperoxide, dicumyl peroxide, di-(2-tert-butyl-peroxyisopropyl)-benzene, 2,5-dimethyl-2,5-di-(tert-butylperoxy)-hexane, tert-butylcumyl peroxide, 2,5-dimethyl-2,5-di(tert-butylperoxy)hexyne-3, di-tert-butyl peroxide, 3,6,9-triethyl-3,6,9-trimethyl-1,4,7-triperoxonane, and mixtures thereof.

**As regards the fibrous substrate,** mention may be made of several fibres, uni directional rovings or continuous filament mat, fabrics, felts or nonwovens that may be in the form of strips, laps, braids, locks or pieces. The fibrous material may have various forms and dimensions, either one-dimensional, two-dimensional or three-dimensional. A fibrous substrate comprises an assembly of one or more fibres. When the fibres are continuous, their assembly forms fabrics.

The one-dimensional form corresponds to linear long fibres. The fibres may be discontinuous or continuous. The fibres may be arranged randomly or parallel to each other, in the form of a continuous filament. A fibre is defined by its aspect ratio, which is the ratio between the length and diameter of the fibre. The fibres used in the present invention are long fibres or continuous fibres. The fibres have an aspect ratio of at least 1000, preferably at least 1500, more preferably at least 2000, advantageously at least 3000 and more advantageously at least 5000, even more advantageously at least 6000, more advantageously still at least 7500 and most advantageously at least 10 000.

The two-dimensional form corresponds to nonwoven or woven fibrous mats or reinforcements or bundles of fibres, which may also be braided. Even if the two-dimensional form has a certain thickness and consequently in principle a third dimension, it is considered as two-dimensional according to the present invention.

The three-dimensional form corresponds, for example, to nonwoven fibrous mats or reinforcements or stacked or folded bundles of fibres or mixtures thereof, an assembly of the two-dimensional form in the third dimension.

The origins of the fibrous material may be natural or synthetic. As natural material one can mention plant fibres, wood fibres, animal fibres or mineral fibres.

Natural fibres are, for example, sisal, jute, hemp, flax, cotton, coconut fibres, and banana fibres. Animal fibres are, for example, wool or hair.

As synthetic material, mention may be made of polymeric fibres chosen from fibres of thermosetting polymers, of thermoplastic polymers or mixtures thereof.

The polymeric fibres may consist of polyamide (aliphatic or aromatic), polyester, polyvinyl alcohol, polyolefins, polyurethanes, polyvinyl chloride, polyethylene, unsaturated polyesters, epoxy resins and vinyl esters.

The mineral fibres may also be chosen from glass fibres, especially of E, R or S2 type, basalt fibres, boron fibres or silica fibres.

The fibrous substrate of the present invention is chosen from plant fibres, wood fibres, animal fibres, mineral fibres, synthetic polymeric fibres, glass fibres and carbon fibres, and mixtures thereof.

Preferably, the fibrous substrate is chosen from mineral fibres. More preferably the fibrous substrate is chosen from glass fibres or carbon fibres.

The fibres of the fibrous substrate have a diameter between 0.005 µm and 100 µm, preferably between 1 µm and 50 µm, more preferably between 5 µm and 30 µm and advantageously between 10 µm and 25 µm.

Preferably, the fibres of the fibrous substrate of the present invention are chosen from continuous fibres (meaning that the aspect ratio does not necessarily apply as for long fibres) for the one-dimensional form, or for long or continuous fibres for the two-dimensional or three-dimensional form of the fibrous substrate.

The present invention relates according to the third aspect to a method for preparing a (meth) acrylic composition MC1. The method comprises the step of providing the components a) and b).

In a variation of the process, the compound (C1) of component c) can also be generated in-situ, by providing specific compounds that react and generate the compound (C1). As an example an di-epoxy compound is blended with (meth)acrylic acid.

The present invention relates additionally to a method for preparing a polymeric composite PC1 from a (meth) acrylic composition MC1, said method comprises the following steps:
i) impregnating fibres or a fibrous substrate with the (meth)acrylic composition MC1 comprising:
   a) 100 parts of a liquid (meth)acrylic syrup comprising
      a1) between 10wt% and 50wt% of a (meth)acrylic polymer (P1),
      a2) between 50wt% and 90wt% of a (meth)acrylic monomer (M1) comprising only one (meth)acrylic function, and
   b) between 0.01 and 30phr by weight of a component (LC1) comprising a compound (C1) with at least two polymerizable groups (PG1) and (PG2) and at least two hydroxyl groups;
   c) between 0.1phr and 5phr of a initiator (INI) to start the polymerization of the (meth)acrylic monomer (M1) and polymerizable groups (PG1) and (PG2);
ii) polymerizing the (meth)acrylic composition MC1, that has impregnated the fibres or fibrous substrate.

The components a) to c) in the method for preparing a polymeric composite are the same as defined before and their respective weight ratios. Preferred ranges and preferred characteristics of each compound can be variated in any combination.

The weight ratio of the fibres or fibrous substrate to the (meth)acrylic composition MC1 can be between 1:10 and 10:1. Preferably this ratio between 1:10 and 9:1.

The polymerization step takes place at a temperature typically below 160°C, preferably below 150°C and even more preferably below 140°C.

Preferably the polymerization step takes place at temperature between 40°C and 160°C, preferably between 80°C and 140°C, even more preferably between 100°C and 130°C.

According to another preferred embodiment the polymerization step takes place at temperature between 60°C and 125°C, preferably between 80°C and 125°C, even more preferably between 100°C and 125°C.

The polymeric composite PC1 is preferably a (meth)acrylic polymeric composite, meaning that at least 50wt% of the polymeric matrix of the composite is a (meth)acrylic polymer.

More preferably at least 75wt% of the polymeric matrix of the composite is a (meth)acrylic polymer or a mixture of (meth)acrylic polymers.

The (meth)acrylic polymer(s) of the polymeric matrix of the composite is a polymer comprising at least 50wt% of monomer units in said (meth)acrylic polymer(s) coming from (meth)acrylic monomers, preferably at least 60%wt, more preferably at least 70wt%, still more preferably at least 75wt%.

The polymeric composite PC1 is preferably fibre reinforced polymeric composite.

The present the present invention relates additionally to a process for manufacturing polymeric composite parts, but also mechanical or structured parts or products, from the (meth)acrylic composition MC1. The process for manufacturing polymeric composite parts includes the method for preparing the polymeric composite PC1 from a (meth)acrylic composition MC1.

**As regards the process for manufacturing** polymeric composite parts, but also mechanical or structured parts or products, or the method for preparing the polymeric composite PC1 from a (meth)acrylic composition MC1; various processes could be used for preparing these parts. Mention may be made of vacuum assisted resin infusion (VARI), pultrusion, vacuum bag molding, pressure bag molding, autoclave molding, resin transfer molding (RTM) and variations thereof as (HP-RTM, C-RTM, I-RTM), reaction injection molding (RIM), reinforced reaction injection molding (R-RIM) and variants thereof, press molding, compression molding, liquid compression molding (LCM) or sheet molding compound (SMC) or bulk molding compound (BMC). Without entering too much in detail, all these processes are known for somebody in the field of preparing composites.

A first preferred manufacturing process for manufacturing composite parts or the method for preparing the polymeric composite PC1 from a (meth)acrylic composition MC1; are processes according to which the liquid composition is transferred to the fibrous substrate by impregnation of the fibrous substrate in a mold. The processes requiring a mold a listed above and comprise the wording molding.

A second preferred manufacturing process for manufacturing composite parts or the method for preparing the polymeric composite PC1 from a (meth)acrylic composition MC1; are processes according to which the liquid composition is used in pultrusion process. The fibres are guided through a resin batch comprising the composition according to the invention. The fibres as fibrous substrate are for example in form of a unidirectional roving or a continuous filament mat. After impregnation in the resin bath the wetted fibres are pulled through a heated die, where polymerization takes place.

A third preferred manufacturing process or the method for preparing the polymeric composite PC1 from a (meth)acrylic composition MC1 is vacuum assisted resin infusion (VARI).

The process for manufacturing composite parts, but also mechanical or structured parts or products or the method for preparing the (meth)acrylic polymeric composite PC1 from a (meth)acrylic composition MC1; can additionally comprise the step of post forming or transforming. The post forming includes bending as changing the form of the composite part.

The process for manufacturing composite parts, but also mechanical or structured parts or products, can additionally comprise the step of welding or gluing or laminating.

The thermoplastic composite parts obtained from the processes or method according to the invention can be post formed after polymerization of the liquid composition of the invention. The forming includes bending as changing the form of the composite.

The thermoplastic parts or manufactured composite parts obtained after polymerization of the (meth)acrylic composition MC1 of the invention and/or from the processes according to the invention can be welded, glued or laminated.

The present invention relates additionally to a process for transforming the polymeric composite PC1 or the polymeric composite parts, but also mechanical or structured parts or products, said process comprises the steps of:
i) providing a polymeric composite PC1 or part
ii) heating the polymeric composite PC1 or part
iii) transforming the polymeric composite PC1 or part.

Under transforming is understood that the polymeric composite PC1 changes its form during the transformation step. After the transformation step the form of the polymeric composite PC1 is different from the provided polymeric composite PC1 before the heating step

The transformation can for example be twisting, bending, curving or folding.

The temperature of the heating step is at least 120°C, preferably 140°C and more preferably at least 160°C.

The temperature of the heating step is at most 230°C and preferably at most 200°C.

Preferably, the temperature of the heating step is between 160° and 200°C and advantageously between 160°C and 180°C.

In an exemplified embodiment of the process for transforming a polymeric composite PC1 or the polymeric composite parts, but also mechanical or structured parts or products, said process comprises the steps of:
i) providing a polymeric composite PC1 in form of a FRP rebar;
ii) heating the FRP rebar,
iii) bending the FRP rebar.

Between step ii) and step iii) can also be included the step of twisting.

The bending can for example be made with according to the method and with the device as disclosed in WO2021/008896.

As regards the use of the mechanical parts made of composite material thus manufactured, mention may be made of automotive applications, transport applications such as buses or lorries, nautical applications, railroad applications, sport, aeronautic and aerospace applications, photovoltaic applications, computer-related applications, construction and building applications, telecommunication applications and wind energy applications.

The mechanical part made of composite material is especially a motor vehicle part, boat part, bus part, train part, sport article, plane or helicopter part, space ship or rocket part, photovoltaic module part, a material for construction or building for example composite rebars, dowels and stirrups for civil engineering and high rise construction, wind turbine part for example spar cap of girder of wind turbine blade, furniture part, construction or building part, telephone or cellphone part, computer or television part, or printer or photocopier part.

In a first preferred embodiment the mechanical part made of composite material is especially a material for construction or building for example composite rebars, dowels and stirrups for civil engineering and high rise construction.

In a second preferred embodiment the mechanical part made of composite material is especially a wind turbine part for example a spar cap of girder of wind turbine blade.

In one specific embodiment the manufactured composite part is a bendable FRP rebar. The FRP rebar is used in concrete.

The present invention relates additionally to a reinforced concrete comprising as reinforcing element a composite bar made according the method for preparing a (meth)acrylic polymeric composite composition PC1 and said composite bar is comprising as polymeric matrix the polymerized (meth)acrylic composition MC1.

### [Methods]

The alkaline resistance is evaluated according to ASTM D7705/D7705M-12 (Reapproved 2019) Standard Test Method for Alkaline Resistance of Fiber Reinforced Polymer (FRP) Matrix Composite Bars used in Concrete Construction.

The fiber Reinforced Polymer (FRP) Matrix Composite Bars are heated up to 170°C and then bended according to the method and with the device as disclosed in WO2021/008896.

### [Examples]

A liquid (meth)acrylic syrup S0 is prepared by dissolving 25 parts by weight of the PMMA (BS520 a copolymer of MMA comprising ethyl acrylate as a comonomer) in 75 parts by weight of methyl methacrylate, which is stabilized with MEHQ (hydroquinone monomethyl ether). Syrup S0 is used to prepare the composition of the examples of the invention by adding additional compounds. Syrup S0 is having a dynamic viscosity of 475 mPa*s at 25°C.

Comparative example 1: A syrup S2 is prepared from syrup S0 by adding 2 parts by weight of ethylene glycol dimethacrylate to the 100 parts by weight of the syrup S0.

Example 1. A syrup S1 is prepared from syrup S0 by adding 10 parts of bisphenol A epoxy dimethacrylate (CN159 from SARTOMER), 7.44 parts of styrene and 0.23 part of methacrylic acid to the 100 parts by weight of the syrup S0.

Each of the respective syrups S1 and S2 is blended with 1 phr of initiator di(4-tert-butylcyclohexyl) peroxydicarbonate (P16 - Perkadox^{®} 16 from the company Akzo Nobel), 1 phr of Luperox LP and 1 phr Trigonox 21S (from AKZO) relative to the syrup part, which are added as polymerization initiators. The respective compositions are mixed in order to obtain a homogenous composition. The respective compositions are put under vacuum for degasing at 21°C.

The syrups are used in a pultrusion process to prepare straight FRP rebars with a diameter of 13mm. The polymerization takes place at a temperature between 100° and 130°C and pultrusion die has a length of 1m.

Comparative Example 2: A FRP rebar based on vinyl ester from company Schöck is used: straight Schöck Combar^{®} with a core diameter of 12mm.

The alkaline resistance and the possibility of bending of the obtained FRP rebar is tested.

**Table 1 Results**

| | Alkaline Resistance | Bending |
|---|---|---|
| | ASTM D7705/D7705M Process A | |
| Comparative example 1 | No | Yes |
| Example 1 | Yes | Yes |
| Comparative Example 2 | Yes | Not possible |

The rebar sample according to the invention is much better, showing alkaline resistance and being bendable.

## Claims

1. A (meth)acrylic composition MC1 comprising,
a) 100 parts of a liquid (meth)acrylic syrup comprising
a1) between 10wt% and 50wt% of a (meth)acrylic polymer (P1),
a2) between 50wt% and 90wt% of a (meth)acrylic monomer (M1) comprising only one (meth)acrylic function, and
b) between 0.01 and 30phr by weight of a component (LC1) comprising a compound (C1) with at least two polymerizable groups (PG1) and (PG2) and at least two hydroxyl groups ;
c) optionally between 0.1phr and 5phr of a initiator (Ini) to start the polymerization of the (meth)acrylic monomer (M1) and the polymerizable groups (PG1) and (PG2).

2. The (meth)acrylic composition MC1 according to claim 1, **characterized in that** that the two polymerizable groups (PG1) and (PG2) of compound (C1) are carbon double bonds.

3. The (meth)acrylic composition MC1 according to claim 1, **characterized in that** the two polymerizable groups (PG1) and (PG2) of compound (C1) are α,β-unsaturated carbonyl groups.

4. The (meth)acrylic composition MC1 according to claim 1 or 2, **characterized in that** the two polymerizable groups (PG1) and (PG2) of compound (C1) are chosen from an acrylate group, a methacrylate group or a condensation product comprising maleic acid or itaconic acid or fumaric acid.

5. The (meth)acrylic composition MC1 according to any of claims 1 to 3, **characterized in that** the compound (C1) is a vinyl ester or an unsaturated polyester.

6. The (meth)acrylic composition MC1 according to any of claims 1 to 5, **characterized in that** the (meth)acrylic monomer (M1) is chosen from alkyl acrylic monomers or alkyl methacrylic monomers and mixtures thereof, the alkyl group containing from 1 to 22 linear, branched or cyclic carbons; the alkyl group preferably containing from 1 to 12 linear, branched or cyclic carbons.

7. The (meth)acrylic composition MC1 according to any of claims 1 to 6, **characterized in that** the (meth)acrylic composition MC1 comprises between 0.1phr and 5phr of an initiator (Ini) to start the polymerization of the (meth)acrylic monomer (M1) and the polymerizable groups (PG1) and (PG2).

8. A process for preparing the (meth)acrylic composition MC1 according to any of claims 1 to 7, said process comprises the following steps:
i) providing the following components
a) 100 parts of a liquid (meth)acrylic syrup comprising
a1) between 10wt% and 50wt% of a (meth)acrylic polymer (P1) and
a2) between 50wt% and 90wt% of a (meth)acrylic monomer (M1) comprising only one (meth)acrylic function;
b) between 0.01 and 30phr by weight of a component (LC1) comprising a compound (C1) with at least two polymerizable groups (PG1) and (PG2) and at least two hydroxyl groups;
c) optionally between 0.1phr and 5phr of a initiator (INI) to start the polymerization of the (meth)acrylic monomer (M1) and polymerizable groups (PG1) and (PG2); and
ii) mixing the components a) to b or a) to c).

9. A process for preparing a (meth)acrylic polymeric composition or for preparing a (meth)acrylic polymeric composite PC1, said process comprising the following steps:
i)providing a (meth)acrylic composition MC1 according to any of claims 1 to 7 or prepared by a process according to claim 8;
ii)polymerizing the (meth)acrylic composition MC1.

10. A process for preparing a polymeric composite PC1, said process comprising the following steps:
i)impregnating fibres or fibrous substrate with the (meth)acrylic composition MC1 according to any of claims 1 to 7 or prepared by a process according to claim 8;
ii)polymerizing the (meth)acrylic composition MC1 that has impregnated the fibres or fibrous substrate.

11. A process for transforming a polymeric composite PC1 or polymeric composite parts, but also mechanical or structured parts or products, said process comprises the steps of:
i) providing a polymeric composite PC1 or part made from polymerizing a (meth)acrylic composition MC1 according to any of claims 1 to 7 or prepared by a process according to any of claims 8 to 9 or prepared by a method according to claim 10;
ii) heating the polymeric composite PC1 or part
iii) transforming the polymeric composite PC1 or part.

12. The process according to claim 11, **characterized in that** the transforming is twisting, bending, curving or folding.

13. The process according to claim 11, **characterized in that** the polymeric composite PC1 is in form of a FRP rebar.

14. The process according to claim 11, **characterized in that** the said process comprises the steps of:
i) providing a polymeric composite PC1 in form of a FRP rebar
ii) heating the FRP rebar
iii)bending the FRP rebar.

15. A process for preparing a FRP rebar, said process comprising the following steps:
i) providing a (meth)acrylic composition MC1 according to any of claims 1 to 7 or prepared by a process according to claim 8,
ii) impregnating fibres or fibrous substrate with the (meth)acrylic composition MC1
iii)polymerizing the (meth)acrylic composition MC1 that has impregnated the fibres or fibrous substrate.

16. Use of the (meth)acrylic composition MC1 according to any of claims 1 to 7 or prepared by process according to any of claims 8 to 9, for impregnating fibres or a fibrous substrate.

17. Use of the (meth)acrylic composition MC1 according to any of claims 1 to 7 or prepared by process according to any of claims 8 to 9, for preparing a FRP rebar.

18. Use of a FRP rebar made of according to a process according to claim 15 in concrete.

## Patentansprüche

1. (Meth)acrylzusammensetzung MC1, umfassend:
a) 100 Teile eines flüssigen (Meth)acrylsirups, umfassend
a1) zwischen 10 Gew.-% und 50 Gew.-% eines (Meth)acrylpolymers (P1),
a2) zwischen 50 Gew.-% und 90 Gew.-% eines (Meth)acrylmonomers (M1), das nur eine (Meth)acrylfunktion umfasst, und
b) zwischen 0,01 und 30 Gew.-phr einer Komponente (LC1), die eine Verbindung (C1) mit mindestens zwei polymerisierbaren Gruppen (PG1) und (PG2) und mindestens zwei Hydroxylgruppen umfasst;
c) gegebenenfalls zwischen 0,1 phr und 5 phr eines Initiators (Ini), um die Polymerisation des (Meth)acrylmonomers (M1) und der polymerisierbaren Gruppen (PG1) und (PG2) zu starten.

2. (Meth)acrylzusammensetzung MC1 nach Anspruch 1, **dadurch gekennzeichnet, dass** die beiden polymerisierbaren Gruppen (PG1) und (PG2) von Verbindung (C1) Kohlenstoff-Doppelbindungen sind.

3. (Meth)acrylzusammensetzung MC1 nach Anspruch 1, **dadurch gekennzeichnet, dass** die beiden polymerisierbaren Gruppen (PG1) und (PG2) von Verbindung (C1) α,β-ungesättigte Carbonylgruppen sind.

4. (Meth)acrylzusammensetzung MC1 nach Anspruch 1 oder 2, **dadurch gekennzeichnet, dass** die beiden polymerisierbaren Gruppen (PG1) und (PG2) von Verbindung (C1) ausgewählt sind aus einer Acrylatgruppe, einer Methacrylatgruppe oder einem Kondensationsprodukt, das Maleinsäure oder Itaconsäure oder Fumarsäure umfasst.

5. (Meth)acrylzusammensetzung MC1 nach einem der Ansprüche 1 bis 3, **dadurch gekennzeichnet, dass** die Verbindung (C1) ein Vinylester oder ein ungesättigter Polyester ist.

6. (Meth)acrylzusammensetzung MC1 nach einem der Ansprüche 1 bis 5, **dadurch gekennzeichnet, dass** das (Meth)acrylmonomer (M1) ausgewählt ist aus Alkylacrylmonomeren oder Alkylmethacrylmonomeren und Mischungen davon, wobei die Alkylgruppe 1 bis 22 lineare, verzweigte oder cyclische Kohlenstoffe enthält; wobei die Alkylgruppe bevorzugt 1 bis 12 lineare, verzweigte oder cyclische Kohlenstoffe enthält.

7. (Meth)acrylzusammensetzung MC1 nach einem der Ansprüche 1 bis 6, **dadurch gekennzeichnet, dass** die (Meth)acrylzusammensetzung MC1 zwischen 0,1 phr und 5 phr eines Initiators (Ini) umfasst, um die Polymerisation des (Meth)acrylmonomers (M1) und der polymerisierbaren Gruppen (PG1) und (PG2) zu starten.

8. Verfahren zur Herstellung der (Meth)acrylzusammensetzung MC1 nach einem der Ansprüche 1 bis 7, wobei das Verfahren die folgenden Schritte umfasst:
i) Bereitstellen der folgenden Komponenten
a) 100 Teile eines flüssigen (Meth)acrylsirups, umfassend
a1) zwischen 10 Gew.-% und 50 Gew.-% eines (Meth)acrylpolymers (P1), und
a2) zwischen 50 Gew.-% und 90 Gew.-% eines (Meth)acrylmonomers (M1), das nur eine (Meth)acrylfunktion umfasst;
b) zwischen 0,01 und 30 Gew.-phr einer Komponente (LC1), die eine Verbindung (C1) mit mindestens zwei polymerisierbaren Gruppen (PG1) und (PG2) und mindestens zwei Hydroxylgruppen umfasst;
c) gegebenenfalls zwischen 0,1 phr und 5 phr eines Initiators (INI), um die Polymerisation des (Meth)acrylmonomers (M1) und der polymerisierbaren Gruppen (PG1) und (PG2) zu starten; und
ii) Mischen der Komponenten a) bis b oder a) bis c).

9. Verfahren zur Herstellung einer (Meth)acrylpolymerzusammensetzung oder zur Herstellung eines (Meth)acrylpolymerverbundstoffs PC1, wobei das Verfahren die folgenden Schritte umfasst:
i) Bereitstellen einer (Meth)acrylzusammensetzung MC1 nach einem der Ansprüche 1 bis 7 oder hergestellt durch ein Verfahren nach Anspruch 8;
ii) Polymerisieren der (Meth)acrylzusammensetzung MC1.

10. Verfahren zur Herstellung eines Polymerverbundstoffs PC1, wobei das Verfahren die folgenden Schritte umfasst:
i) Imprägnieren von Fasern oder faserigem Substrat mit der (Meth)acrylzusammensetzung MC1 nach einem der Ansprüche 1 bis 7 oder hergestellt nach einem Verfahren nach Anspruch 8;
ii) Polymerisieren der (Meth)acrylzusammensetzung MC1, die die Fasern oder das faserige Substrat imprägniert hat.

11. Verfahren zum Umformen von Polymerverbundstoff PC1 oder Polymerverbundstoffteilen, jedoch auch mechanischen oder strukturierten Teilen oder Produkten, wobei das Verfahren die folgenden Schritte umfasst:
i) Bereitstellen eines Polymerverbundstoffs PC1 oder Teils, das gefertigt wurde durch Polymerisieren einer (Meth)acrylzusammensetzung MC1 nach einem der Ansprüche 1 bis 7 oder hergestellt durch ein Verfahren nach einem der Ansprüche 8 bis 9 oder hergestellt durch ein Verfahren nach Anspruch 10;
ii) Erhitzen des Polymerverbundstoffs PC1 oder Teils;
iii) Umformen des Polymerverbundstoffs PC1 oder Teils.

12. Verfahren nach Anspruch 11, **dadurch gekennzeichnet, dass** das Umformen Tordieren, Biegen, Krümmen oder Falten ist.

13. Verfahren nach Anspruch 11, **dadurch gekennzeichnet, dass** der Polymerverbundstoff PC1 in Form eines FRP-Bewehrungsstabs vorliegt.

14. Verfahren nach Anspruch 11, **dadurch gekennzeichnet, dass** das Verfahren die folgenden Schritte umfasst:
i) Bereitstellen eines Polymerverbundstoffs PC1 in Form eines FRP-Bewehrungsstabs;
ii) Erhitzen des FRP-Bewehrungsstabs;
iii) Biegen des FRP-Bewehrungsstabs.

15. Verfahren zur Herstellung eines FRP-Bewehrungsstabs, wobei das Verfahren die folgenden Schritte umfasst:
i) Bereitstellen einer (Meth)acrylzusammensetzung MC1 nach einem der Ansprüche 1 bis 7 oder hergestellt durch ein Verfahren nach Anspruch 8;
ii) Imprägnieren von Fasern oder faserigem Substrat mit der (Meth)acrylzusammensetzung MC1;
iii) Polymerisieren der (Meth)acrylzusammensetzung MC1, die die Fasern oder das faserige Substrat imprägniert hat.

16. Verwendung der (Meth)acrylzusammensetzung MC1 nach einem der Ansprüche 1 bis 7 oder hergestellt nach einem Verfahren nach einem der Ansprüche 8 bis 9 zum Imprägnieren von Fasern oder faserigem Substrat.

17. Verwendung der (Meth)acrylzusammensetzung MC1 nach einem der Ansprüche 1 bis 7 oder hergestellt nach einem Verfahren nach einem der Ansprüche 8 bis 9 zur Herstellung eines FRP-Bewehrungsstabs.

18. Verwendung eines FRP-Bewehrungsstabs, der gemäß einem Verfahren nach Anspruch 15 gefertigt ist, in Beton.

## Revendications

1. Composition (méth)acrylique MC1 comprenant,
a) 100 parties d'un sirop (méth)acrylique liquide comprenant
a1) entre 10 % en poids et 50 % en poids d'un polymère (méth)acrylique (P1),
a2) entre 50 % en poids et 90 % en poids d'un monomère (méth)acrylique (M1) comprenant une seule fonction (méth)acrylique et
b) entre 0,01 et 30 phr en poids d'un composant (LC1) comprenant un composé (C1) comportant au moins deux groupes polymérisables (PG1) et (PG2) et au moins deux groupes hydroxyle ;
c) éventuellement entre 0,1 phr et 5 phr d'un initiateur (Ini) pour démarrer la polymérisation du monomère (méth)acrylique (M1) et des groupes polymérisables (PG1) et (PG2).

2. Composition (méth)acrylique MC1 selon la revendication 1, **caractérisée en ce que** les deux groupes polymérisables (PG1) et (PG2) du composé (C1) sont des doubles liaisons de carbone.

3. Composition (méth)acrylique MC1 selon la revendication 1, **caractérisée en ce que** les deux groupes polymérisables (PG1) et (PG2) du composé (C1) sont des groupes carbonyle α,β-insaturés.

4. Composition (méth)acrylique MC1 selon la revendication 1 ou 2, **caractérisée en ce que** les deux groupes polymérisables (PG1) et (PG2) du composé (C1) sont choisis parmi un groupe acrylate, un groupe méthacrylate ou un produit de condensation comprenant de l'acide maléique ou de l'acide itaconique ou de l'acide fumarique.

5. Composition (méth)acrylique MC1 selon l'une quelconque des revendications 1 à 3, **caractérisée en ce que** le composé (C1) est un ester vinylique ou un polyester insaturé.

6. Composition (méth)acrylique MC1 selon l'une quelconque des revendications 1 à 5, **caractérisée en ce que** le monomère (méth)acrylique (M1) est choisi parmi des monomères acryliques alkyliques ou des monomères méthacryliques alkyliques et des mélanges correspondants, le groupe alkyle contenant de 1 à 22 atomes de carbone linéaires, ramifiés ou cycliques, le groupe alkyle contenant préférablement de 1 à 12 atomes de carbone linéaires, ramifiés ou cycliques.

7. Composition (méth)acrylique MC1 selon l'une quelconque des revendications 1 à 6, **caractérisée en ce que** la composition (méth)acrylique MC1 comprend entre 0,1 phr et 5 phr d'un initiateur (Ini) pour démarrer la polymérisation du monomère (méth)acrylique (M1) et des groupes polymérisables (PG1) et (PG2).

8. Procédé pour la préparation de la composition (méth)acrylique MC1 selon l'une quelconque des revendications 1 à 7, ledit procédé comprenant les étapes suivantes :
i) fourniture des composants suivants
a) 100 parties d'un sirop (méth)acrylique liquide comprenant
a1) entre 10 % en poids et 50 % en poids d'un polymère (méth)acrylique (P1) et
a2) entre 50 % en poids et 90 % en poids d'un monomère (méth)acrylique (M1) comprenant une seule fonction (méth)acrylique ;
b) entre 0,01 et 30 phr en poids d'un composant (LC1) comprenant un composé (C1) comportant au moins deux groupes polymérisables (PG1) et (PG2) et au moins deux groupes hydroxyle ;
c) éventuellement entre 0,1 phr et 5 phr d'un initiateur (INI) pour démarrer la polymérisation du monomère (méth)acrylique (M1) et des groupes polymérisables (PG1) et (PG2) ; et
ii) mélange des composants a) à b) ou a) à c).

9. Procédé pour la préparation d'une composition polymérique (méth)acrylique ou pour la préparation d'un composite polymérique (méth)acrylique PC1, ledit procédé comprenant les étapes suivantes :
i) fourniture d'une composition (méth)acrylique MC1 selon l'une quelconque des revendications 1 à 7 ou préparée par un procédé selon la revendication 8 ;
ii) polymérisation de la composition (méth)acrylique MC1.

10. Procédé pour la préparation d'un composite polymérique PC1, ledit procédé comprenant les étapes suivantes :
i) imprégnation de fibres ou d'un substrat fibreux avec la composition (méth)acrylique MC1 selon l'une quelconque des revendications 1 à 7 ou préparée par un procédé selon la revendication 8 ;
ii) polymérisation de la composition (méth)acrylique MC1 qui a imprégné les fibres ou le substrat fibreux.

11. Procédé pour la transformation d'un composite polymérique PC1 ou de pièces en composite polymérique, mais également de pièces ou produits mécaniques ou structurés, ledit procédé comprenant les étapes de :
i) fourniture d'un composite polymérique PC1 ou d'une pièce formée à partir de la polymérisation d'une composition (méth)acrylique MC1 selon l'une quelconque des revendications 1 à 7 ou préparée par un procédé selon l'une quelconque des revendications 8 à 9 ou préparée par un procédé selon la revendication 10 ;
ii) chauffage du composite polymérique PC1 ou de la pièce
iii) transformation du composite polymérique PC1 ou de la pièce.

12. Procédé selon la revendication 11, **caractérisé en ce que** la transformation est une torsion, un cintrage, un courbage ou un pliage.

13. Procédé selon la revendication 11, **caractérisé en ce que** le composite polymérique PC1 est sous la forme d'une barre d'armature FRP.

14. Procédé selon la revendication 11, **caractérisé en ce que** ledit procédé comprend les étapes de :
i) fourniture d'un composite polymérique PC1 sous forme d'une barre d'armature FRP ;
ii) chauffage de la barre d'armature FRP
iii) cintrage de la barre d'armature FRP.

15. Procédé pour la préparation d'une barre d'armature FRP, ledit procédé comprenant les étapes suivantes :
i) fourniture d'une composition (méth)acrylique MC1 selon l'une quelconque des revendications 1 à 7 ou préparée par un procédé selon la revendication 8,
ii) imprégnation de fibres ou d'un substrat fibreux avec la composition (méth)acrylique MC1
iii) polymérisation de la composition (méth)acrylique MC1 qui a imprégné les fibres ou le substrat fibreux.

16. Utilisation de la composition (méth)acrylique MC1 selon l'une quelconque des revendications 1 à 7 ou préparée par un procédé selon l'une quelconque des revendications 8 à 9, pour l'imprégnation de fibres ou d'un substrat fibreux.

17. Utilisation de la composition (méth)acrylique MC1 selon l'une quelconque des revendications 1 à 7 ou préparée par un procédé selon l'une quelconque des revendications 8 à 9, pour la préparation d'une barre d'armature FRP.

18. Utilisation d'une barre d'armature FRP préparée selon un procédé selon la revendication 15 dans du béton.
